# EUROPEAN PATENT APPLICATION

(11) **EP 2 840 844 A2**
(43) Date of publication of application: **25.02.2015**
(21) Application number: 14176545.3
(22) Date of filing: 23.05.2012
(51) Int. Cl.: H04W 56/00

(54) **Uplink timing alignment**

(30) Priority: 08.02.2012 US 201261596387 P
(62) Divisional of application: 12766181.7
(71) Applicant: Telefonaktiebolaget L M Ericsson (PUBL), SE-164 83 Stockholm (SE)
(72) Inventor: Bergström, Mattias, SE-120 71 Stockholm (SE); Wittberg, Mikael, SE-753 19 Uppsala (SE); Larsson, Daniel, SE-186 53 Vallentuna (SE)
(74) Representative: Kühn, Friedrich Heinrich

(57) **Abstract**

Some of the example embodiments presented herein are directed towards a user equipment **(501),** and corresponding method therein, for uplink timing alignment. The user equipment **(501)** may initiate a timing advance value to zero during a creation of a timing advance group, a modification of a timing advance group, or if a TAC MAC CE command has not been performed. The user equipment **(501)** may further update the timing advance value based on a received TAC MAC CE command.

Some of the example embodiments presented herein are directed towards a base station, and corresponding method therein, for uplink timing alignment. The base station **(401)** may be configured to estimate a proximity of the user equipment **(501)** to an uplink receive or an uplink cell size of the user equipment. The base station may determine a TAC MAC CE based on the estimation and send the TAC MAC CE to the user equipment **(501)** for uplink timing alignment.

## Description

### TECHNICAL FIELD

Example embodiments are presented herein to provide uplink timing alignment for a user equipment, in a wireless communications network, without the use of a random access procedure.

### BACKGROUND

### Long Term Evolution Systems

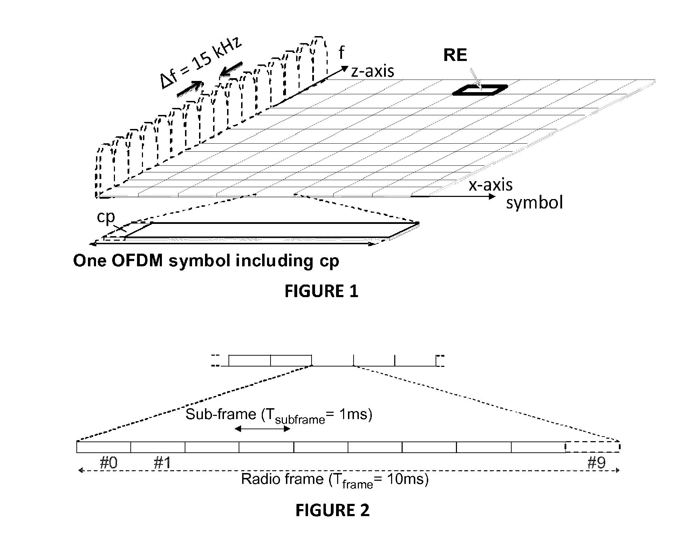

Long Term Evolution (LTE) uses Orthogonal Frequency Division Multiplexing (OFDM) in the downlink direction and a Discrete Fourier Transform (DFT)-spread OFDM in the uplink direction. The basic LTE downlink physical resource can thus be seen as a time-frequency grid as illustrated in **Figure 1****,** where each resource element corresponds to one OFDM subcarrier during one OFDM symbol interval. In the time domain, LTE downlink transmissions may be organized into radio frames of 10ms, with each radio frame consisting of ten equally-sized subframes of length T_{subframe} = 1 ms, as illustrated in **Figure 2****.**

Furthermore, the resource allocation in LTE is typically described in terms of resource blocks (RB), where a resource block corresponds to one slot (0.5ms) in the time domain and 12 subcarriers in the frequency domain. A pair of two adjacent resource blocks in a time direction (1.0ms) is known as a resource block pair. Resource blocks are numbered in the frequency domain, starting with 0 from one end of the system bandwidth.

The notion of virtual resource blocks (VRB) and physical resource blocks (PRB) has been introduced in LTE. The actual resource allocation to a user equipment (UE) is made in terms of VRB pairs. There are two types of resource allocations, localized and distributed. In the localized resource allocation, a VRB pair is directly mapped to a PRB pair, hence two consecutive and localized VRBs are also placed as consecutive PRBs in the frequency domain. On the other hand, the distributed VRBs are not mapped to consecutive PRBs in the frequency domain, thereby providing frequency diversity for data channel transmitted using these distributed VRBs.

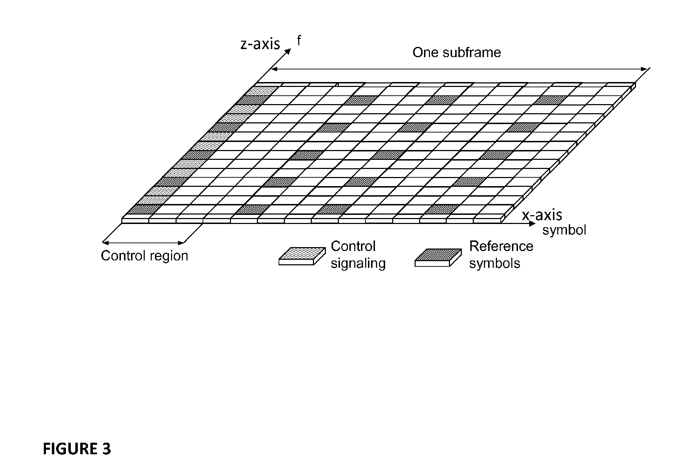

Downlink transmissions are dynamically scheduled, i.e., in each subframe the base station transmits control information regarding which user equipments data is transmitted and upon which resource blocks the data is transmitted, in the current downlink subframe. This control signaling is typically transmitted in the first 1, 2, 3 or 4 OFDM symbols in each subframe and the number n = 1, 2, 3 or 4 is known as the Control Format Indicator (CFI). The downlink subframe also comprises Common Reference Signals (CRS), which are known to the receiver and used for coherent demodulation of, for example, the control information. A downlink system with 3 OFDM symbols for control purposes is illustrated in **Figure 3****.**

### Carrier Aggregation

The LTE Release 10 (Rel-10) specifications have recently been standardized, supporting Component Carrier (CC) bandwidths up to 20 MHz, which is the maximum LTE Rel-8 carrier bandwidth. Hence, with an LTE Rel-10 operation, operations with a bandwidth wider than 20 MHz is possible and appears as a number of LTE carriers to an LTE Rel-10 user equipment.

In particular for early LTE Rel-10 deployments, it may be expected that there may be a smaller number of LTE Rel-10 capable user equipments compared to many LTE legacy user equipments. Therefore, it may be useful to assure an efficient use of a wide carrier also for legacy user equipments, i.e., that it is possible to implement carriers where legacy user equipments can be scheduled in all parts of the wideband LTE Rel-10 carrier. The straightforward way to obtain this would be by means of Carrier Aggregation (CA). CA implies that an LTE Rel-10 user equipment can receive multiple CCs, where the CCs have, or at least the possibility to have, the same structure as a Rel-8 carrier.

The LTE Rel-10 specification may support up to 5 aggregated carriers where each carrier is limited in the RF specifications to have one of six bandwidths namely 6, 15, 25, 50, 75, or 100 RB, which corresponds to 1.4, 3, 5, 10, 15, and 20 MHz, respectively.

The number of aggregated CCs as well as the bandwidth of the individual CCs may be different for uplink and downlink. A symmetric configuration refers to the case where the number of CCs in downlink and uplink is the same whereas an asymmetric configuration refers to the case that the number of CCs is different. It should be noted that the number of CCs configured in a cell may be different from the number of CCs seen by a user equipment. A user equipment may for example support more downlink CCs than uplink CCs, even though the network is configured with the same number of uplink and downlink CCs.

CCs are also referred to as cells or serving cells. More specifically, in an LTE network the component carriers aggregated by a user equipment are denoted as a primary cell (PCell) and secondary cells (SCells). The term Serving Cell comprises both PCell and SCells. The PCell is terminal specific and is "more important", i.e., vital control signaling and other important signaling is typically handled via the PCell. The component carrier configured as the PCell is the primary CC whereas all other component carriers are secondary CC.

During an initial access, a LTE Rel-10 user equipment behaves similarly to a LTE Rel-8 user equipment. Upon successful connection to the network, a user equipment may - depending on its own capabilities and the network - be configured with additional CCs for uplink and downlink. Configuration is based on the Radio Resource Control (RRC). Due to the heavy signaling and rather slow speed of RRC signaling it is envisioned that a user equipment may be configured with multiple CCs even though not all of them are currently used. If a user equipment is configured on multiple CCs this would imply it has to monitor all downlink CCs for a Physical Downlink Control Channel (PDCCH) and a Physical Downlink Shared Channel (PDSCH). This implies a wider receiver bandwidth, higher sampling rates, etc., resulting in high power consumption.

### Timing Alignment

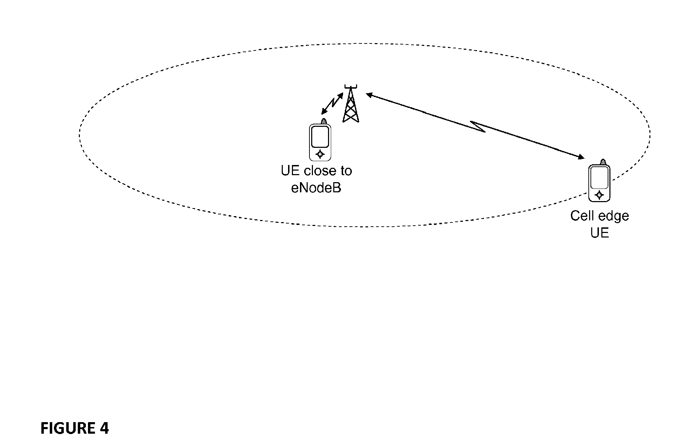

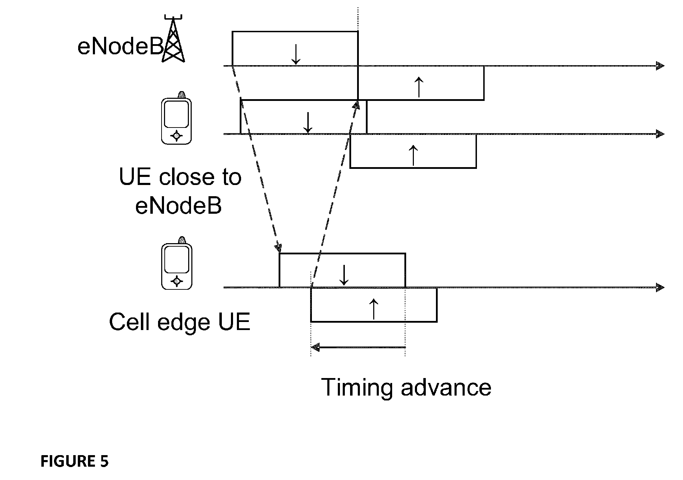

In order to preserve the orthogonality in the uplink, the uplink transmissions from multiple user equipments need to be time aligned at the eNodeB. Since user equipments may be located at different distances from the eNodeB, as illustrated in **Figure 4****,** the user equipments will need to initiate their uplink transmissions at different times. A user equipment far from the eNodeB needs to start a transmission earlier than a user equipment close to the eNodeB. This can for example be handled by time advance of the uplink transmissions, where a user equipment starts its uplink transmission before a nominal time given by the timing of the downlink signal received by the user equipment. This concept is illustrated in **Figure 5****.**

The uplink timing advance may be maintained by the eNodeB through timing alignment commands to the user equipment based on measurements on uplink transmissions from that particular user equipment. Through timing alignment commands, the user equipment may be ordered to start its uplink transmissions earlier or later. This applies to all uplink transmissions except for random access preamble transmissions on a Physical Random Access Control Channel (PRACH), i.e. comprising transmissions on a Physical Uplink Shared Channel (PUSCH), Physical Uplink Control Channel (PUCCH), and Sounding Reference Signals (SRS).

There is a strict relation between downlink transmissions and the corresponding uplink transmission. One example of such a relationship may be the timing between a downlink- Synchronization Channel (SCH) transmission on a Physical Downlink Shared Channel (PDSCH) to the Hybrid Automatic Repeat request (HARQ) acknowledgment/negative acknowledgement (ACK/NACK) feedback transmitted in uplink (either on PUCCH or PUSCH). A further example may be the timing between an uplink grant transmission on PDCCH to the UL-SCH transmission on PUSCH.

By increasing the timing advance value for a user equipment, the user equipment processing time between the downlink transmission and the corresponding uplink transmission decreases. For this reason, an upper limit on the maximum timing advance has been defined by 3GPP in order to set a lower limit on the processing time available for a user equipment. For LTE, this value has been set to roughly 667us which corresponds to a cell range of 100km. It should be noted that the Timing Advance (TA) value compensates for the round trip delay.

In LTE Rel-10 there is a single timing advance value per user equipment and all uplink cells are assumed to have the same transmission timing. The reference point for the timing advance is the receive timing of the primary downlink cell.

In LTE Rel-11 different serving cells used by the same user equipment may have a different timing advance. The current assumption in 3GPP is that the serving cells sharing the same TA value, for example depending on the deployment, will be configured by the network to belong to a so called TA group. It is further assumed that if at least one serving cell of the TA group is time aligned, all serving cells belonging to the same group may use this TA value. To obtain time alignment for a Scell belonging to a different TA group than the PCell, the current 3GPP assumption is that a network initiated random access may be used to obtain an initial TA for this SCell, and for the TA group the SCell belongs to. The reference point for the timing advance has not yet been decided in 3GPP RAN2.

### MAC Control Elements

In LTE Rel-8/9/10 the eNodeB and the user equipment use so called Medium Access (MAC) Control Elements (CE) to exchange information such as buffer status reports, power headroom reports and others. A comprehensive list of MAC CEs is provided in section 6.1.3 of 3GPP TS 36.213, Physical layer procedures, "Evolved Universal Terrestrial Radio Access (E-UTRA), Medium Access Control (MAC) protocol specification", which is incorporated herein by reference.

### SCell Activation and Deactivation

In Rel-10, Carrier Aggregation was introduced and with that the concept of SCells, additional resources which could be configured/deconfigured and activated/deactivated on a need basis. The activation/deactivation procedure is described in detail in section 5.13 of 3GPP TS 36.213, Physical layer procedures, "Evolved Universal Terrestrial Radio Access (E-UTRA), Medium Access Control (MAC) protocol specification". Each SCell is configured with a SCellIndex, which is an identifier or so called Cell Index which is unique among all serving cells configured for a particular user equipment. The PCell has a Cell Index of 0 and a SCell may have a integer cell index of 1 to 7.

One of the areas where MAC CEs are used is for activation and deactivation of SCells. The Rel-10 Activation/Deactivation MAC CE is defined in section 6.1.3.8 of 3GPP TS 36.213, Physical layer procedures, "Evolved Universal Terrestrial Radio Access (E-UTRA), Medium Access Control (MAC) protocol specification".

The Activation/Deactivation MAC CE comprises a single octet featuring seven C-fields and one R-field. Each C-field corresponds to a specific SCellIndex and indicates whether the specific SCell is activated or deactivated. The user equipment will ignore all C-fields associated with cell indices not being configured. The Activation/Deactivation MAC CE always indicates the activation status of all configured SCells, meaning that if the eNB wants to activated one SCell it has to comprise all configured SCells, setting them to activated or deactivated even if they status has not changed.

### Random Access

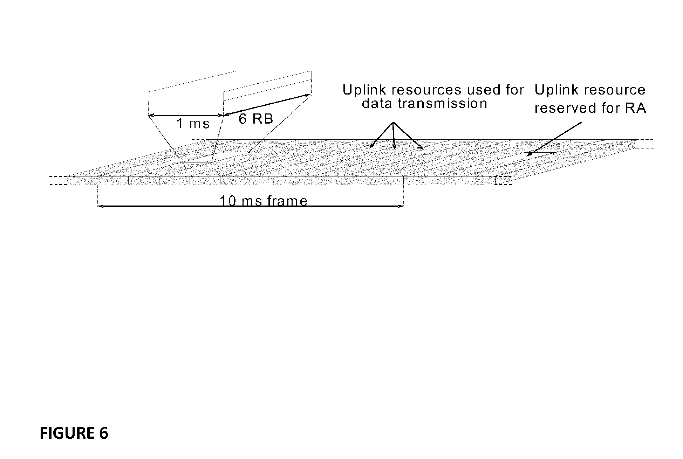

In LTE, as in any communication system, a mobile terminal, or user equipment, may need to contact the network (via the eNodeB) without having a dedicated resource in the uplink (from user equipment to base station). To handle this, a random access procedure is available where a user equipment that does not have a dedicated uplink resource may transmit a signal to the base station. The first message of this procedure is typically transmitted on a special resource reserved for random access, a Physical Random Access Channel (PRACH). This channel may for instance be limited in time and/or frequency (as in LTE), as illustrated in **Figure 6****.** The resources available for PRACH transmission is provided to the terminals as part of the broadcasted system information, or as part of dedicated RRC signaling in case of, for example, a handover.

In LTE, the random access procedure can be used for a number of different reasons. One example may be an initial access for user equipments in an LTE_IDLE or LTE_DETACHED state. Further examples may comprise incoming handover, resynchronization of the uplink, scheduling request for a user equipment that is not allocated any other resource for contacting the base station, and/or positioning.

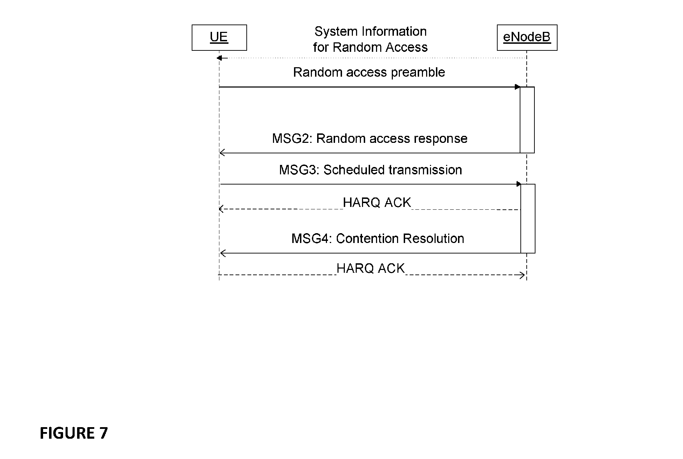

The contention-based random access procedure used in LTE is illustrated in **Figure 7****.** The user equipment starts the random access procedure by randomly selecting one of the preambles available for contention-based random access. The user equipment then transmits the selected random access preamble on the Physical Random Access Channel (PRACH) to eNode B in a Radio Access Network (RAN).

The RAN acknowledges any preamble it detects by transmitting a random access response (MSG2) comprising an initial grant to be used on the uplink shared channel, a temporary C-RNTI, and a time alignment (TA) update based on the timing offset of the preamble measured by the eNodeB on the PRACH. The MSG2 is transmitted in the downlink to the user equipment and its corresponding PDCCH message CRC is scrambled with a Random Access (RA)-Radio Network Temporary Identifier (RNTI).

When receiving the response, the user equipment uses the grant to transmit a message (MSG3) that in part is used to trigger the establishment of radio resource control and in part to uniquely identify the user equipment on the common channels of the cell. The timing alignment command provided in the random access response is applied in the uplink transmission in MSG3. The eNB can change the resources blocks that are assigned for a MSG3 transmission by sending an uplink grant that's CRC is scrambled with the Temporary Cellular (TC)-RNTI.

The MSG4 which is then contention resolution has its PDCCH CRC scrambled with the Cell (C)-RNTI if the user equipment previously has a C-RNTI assigned. If the user equipment does not have a C-RNTI previously assigned, then the PDCCH CRC is scrambled with the TC-RNTI.

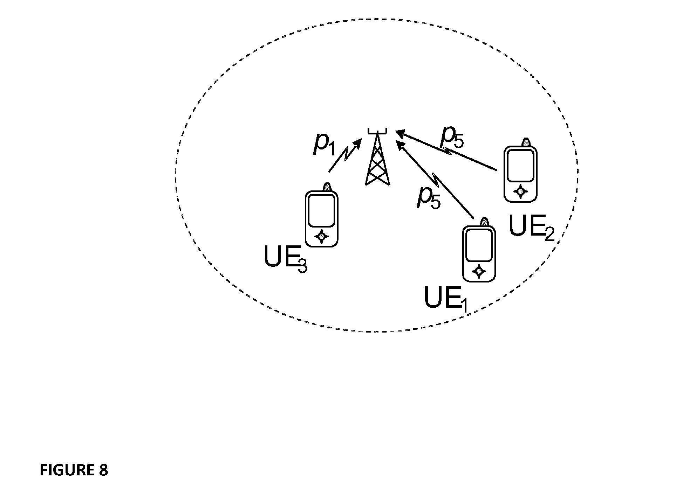

The procedure ends with the RAN solving any preamble contention that may have occurred for the case that multiple user equipments transmitted the same preamble at the same time. This can occur since each user equipment randomly selects when to transmit and which preamble to use. If multiple user equipments select the same preamble for the transmission on a Random Access Control Channel (RACH), there will be contention between these user equipments that needs to be resolved through a contention resolution message (MSG4). The case when contention occurs is illustrated in **Figure 8****,** where two user equipments (UE₁ and UE₂) transmit the same preamble (p5) at the same time. A third user equipment (UE₃) also transmits with the same RACH, but the third user equipment transmits with a different preamble (p1), there is no contention between this user equipment (UE₃) and the other two user equipments (UE₁ and UE₂).

A user equipment can also perform non-contention based random access. A non-contention based random access or contention free random access can, e.g., be initiated by the eNB to get the UE to achieve synchronization in uplink. The eNB initiates a non-contention based random access either by sending a PDCCH order or by indicating it in an RRC message. The later of the two may be used in case of HO.

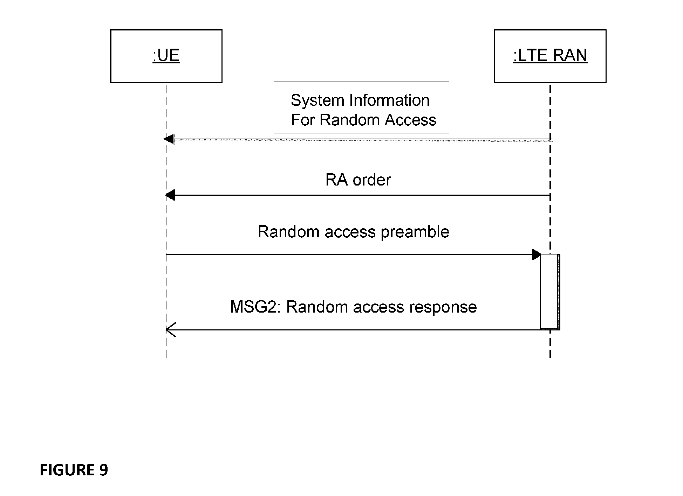

The eNB can also order the user equipment through a PDCCH message to perform a contention based random access, as was previously explained in Figure 8. The messaging procedure for the user equipment to perform contention free random access is illustrated in Figure 9. Similar to the contention based random access the MSG2 is transmitted in the downlink to the user equipment and its corresponding PDCCH message CRC is scrambled with the RA-RNTI. The user equipment considers the contention resolution successfully completed after it has received MSG2 successfully.

For the contention free random access as for the contention based random access does the MSG2 comprises a timing alignment value. This enables the eNB to set the initial/updated timing according to the UEs transmitted preamble.

### Initial TAC and Subsequent TAC

A TA value may be used by the user equipment to offset the uplink transmission timing relative to a reference, a so called timing reference. At random access the user equipment assumes an initial TA value of zero. The eNB measures the time misalignment of wanted uplink timing on this cell and the actually uplink timing of the preamble transmission. The eNB creates an initial TA command comprising which tells the user equipment how much to advance the uplink transmission.

After the random access is successfully completed the user equipment will initiate uplink transmission on cell i at a time Ti before it receives a downlink subframe start on cell i. The time Ti is deduced from the TA-value for cell i. When receiving subsequent uplink transmissions, the eNB also measures the time misalignment between the wanted uplink timing for this cell and the actually uplink timing from the user equipment. If measured time misalignment is exceeds a certain value, the eNB creates a TA command comprising a delta update for the TA command which is sent to the user equipment.

In current release, the initial TA value is an 11 bit long value and is send in the random access response message. This value conveys to the user equipment how much the uplink transmission on a cell should be advanced in relation to the timing reference. In Rel-10 this timing reference is the downlink of the PCell. Subsequent TA values and updates of the current TA value and are carried in a 6 bit long value and is sent in a MAC control element. Worth stressing is that subsequent TACs are delta updates of the current TA value. Hence, an initial TA value is needed for subsequent TA delta updates to be meaningful, which means that a RA is needed if subsequent TA commands are meaningful.

### SUMMARY

At least one example object of the example embodiments presented herein is to provide uplink timing alignment in an efficient manner. Thus, according to some of the example embodiments presented herein, at least one means to achieve the example object is to provide timing advance alignment without the use of a random access procedure.

Accordingly, a few non-limiting example advantages of providing timing advance alignment without the use of a random access procedure may be that by applying any of the example embodiments presented herein, the user equipment may reach uplink time alignment on the serving cells in a TA group without performing a random access procedure. If the eNB can know which TA value the user equipment should use for a TA group without performing timing measurements on a preamble transmission, a random access procedure could be avoided and the RACH load will not be increased. Furthermore, the delay for achieving uplink time alignment will be shorter. The delay will be shorter because a random access procedure will take more time than the transmission of a TAC MAC CE. It is expected to be the case, for example, in a scenario in which the range of the cells in a TA group is smaller than one TA value step. According to current specification a TA value step is approximately 0.5 microseconds, or measured in propagation distance is approximately 150-160 meters.

Another example advantage may be provided in the scenario in which the eNB can know the needed TA value for a serving cell without performing a random access procedure if the eNB knows the position of the user equipment. The eNB could then calculate the distance between the user equipment and the node offering serving cells to the user equipment, and by knowing the distance between the node and the user equipment a TA value can be calculated without a random access procedure.

Some of the example embodiments are directed towards a method, in a user equipment, for uplink timing alignment. The user equipment is in wireless communications network. The method comprises initiating a timing advance value to zero during a creation of a timing advance group. The initiating occurs during a modification of a timing advance group, or if a timing advance command medium access control control element (TAC MAC CE) is received and a random access procedure has not been performed. The method further comprises receiving, from a base station, a TAC MAC CE command, and updating the timing advance value based on the received TAC MAC CE command. The method further comprises transmitting, to an uplink receiver, uplink communications based on the updated timing advance value.

Some of the example embodiments are directed towards a user equipment for uplink timing alignment. The user equipment is comprised in a wireless communications network. The user equipment comprises processing circuitry configured to initiate a timing advance value to zero during a creation of a timing advance group. The initiation occurs during a modification of a timing advance group, or if a TAC MAC CE is received and a random access procedure has not been performed. The user equipment further comprises radio circuitry configured to receive, from a base station, a TAC MAC CE command. The processing circuitry is further configured to update the timing advance value based on the received TAC MAC CE command. The radio circuitry is further configured to transmit, to an uplink receiver, uplink communications based on the updated timing advance value.

Some of the example embodiments are directed towards a method in a base station for uplink timing alignment. The base station is comprised in a carrier aggregated wireless communications network. The method comprises estimating a proximity of a user equipment to an uplink receiver, or a uplink cell size of the user equipment. The method further comprises determining a TAC MAC CE command based on the estimating and sending the TAC MAC CE command to the user equipment for uplink timing alignment.

Some of the example embodiments are directed towards a base station for uplink timing alignment. The base station is comprised in a carrier aggregated wireless communications network. The base station comprises processing circuitry configured to estimate a proximity of a user equipment to an uplink receiver, or a uplink cell size of the user equipment. The processing circuitry is further configured to determine a TAC MAC CE command based on the estimation. The base station further comprises radio circuitry configured to send the TAC MAC CE command to the user equipment for uplink timing alignment.

### DEFINITIONS

- 3GPP: 3rd Generation Partnership Project
- ACK: Acknowledgment
- AL: Aggregation Layer
- ARQ: Automatic Repeat request
- C: Cell
- CA: Carrier Aggregation
- CC: Component Carrier
- CCE: Control Channel Elements
- CE: Control Element
- CFI: Control Format Indicator
- CRC: Cyclic Redundancy Check
- CRS: Common Reference Symbols
- C-RNTI: Cell-Radio Network Temporary Identifier
- DFT: Discrete Fourier Transform
- DL: Downlink
- eNB: Evolve Node B
- E-UTRA: Evolved Universal Terrestrial Radio Access
- HARQ: Hybrid ARQ
- HO: Handover
- LTE: Long Term Evolution
- MAC: Medium Access Control
- NACK: Negative Acknowledgment
- OFDM: Orthogonal Frequency Division Multiplexing
- PCC: Primary component carrier
- PCell: Primary cell
- PDCCH: Physical Downlink Control Channel
- PDSCH: Physical Downlink Shared Channel
- PRACH: Physical Random Access Control Channel
- PRB: Physical Resource Block
- PUCCH: Physical Uplink Control Channel
- PUSCH: Physical Uplink Shared Channel
- RACH: Random Access Control Channel
- RA: Random Access
- RA-RNTI: Random Access-Radio Network Temporary Identifier
- RB: Resource Block
- RAN: Radio Access Network
- RF: Radio Frequency
- RNTI: Radio Network Temporary Identifier(s)
- RRC: Radio Resource Control
- SCC: Secondary component carrier
- SCell: Secondary cell
- SCH: Synchronization Channel
- SRS: Sounding Reference Signals
- TA: Timing Advance
- TAC: Timing Advance Command
- TC: Temporary Cellular
- TR: Timing Reference
- TC-RNTI: Temporary Cell-Radio Network Temporary Identifier
- UE: User Equipment
- UL: Uplink
- VRB: Virtual Resource Block

### BRIEF DESCRIPTION OF THE DRAWINGS

The foregoing will be apparent from the following more particular description of the example embodiments, as illustrated in the accompanying drawings in which like reference characters refer to the same parts throughout the different views. The drawings are not necessarily to scale, emphasis instead being placed upon illustrating the example embodiments.
FIG. 1 is an illustrative example of a LTE downlink physical resource;
FIG. 2 is a schematic of a LTE time-domain structure;
FIG. 3 is an illustration of a downlink subframe;
FIG. 4 is an example illustration of a cell with two user equipments at different distances from a base station;
FIG. 5 is an illustration of timing advance of uplink transmission with regard to distance;
FIG. 6 is an illustration of a random access preamble transmission;
FIG. 7 is a signalling diagram for a contention based random access procedure in LTE;
FIG. 8 is an illustration of a contention based random access;
FIG. 9 is a signalling diagram for a contention-free random access procedure in LTE;
FIG. 10 is an example node configuration of a user equipment, according to some of the example embodiments;
FIG. 11 is an example node configuration of a base station, according to some of the example embodiments;
FIG. 12 is a flow diagram illustrating example operations of the user equipment of FIG. 10, according to some of the example embodiments; and
FIG. 13 is a flow diagram illustrating example operations of the base station of FIG. 11, according to some of the example embodiments.

### DETAILED DESCRIPTION

In the following description, for purposes of explanation and not limitation, specific details are set forth, such as particular components, elements, techniques, etc. in order to provide a thorough understanding of the example embodiments. However, the example embodiments may be practiced in other manners that depart from these specific details. In other instances, detailed descriptions of well-known methods and elements are omitted so as not to obscure the description of the example embodiments.

### Overview

As part of the development of the example embodiments presented herein, a problem will first be identified and discussed. In current LTE Rel-11 specification, for a user equipment to achieve an initial uplink time alignment on a serving cell, it is required to successfully complete a random access procedure. This is because the eNB will measure the timing misalignment of the user equipment and provide the user equipment with an 11-bit initial TA value during the random access procedure. There are some scenarios, however, that it is expected that the eNB could determine the TA value suitable for one or many user equipment TA groups without performing a random access procedure. But even in these scenarios the user equipment is required to perform a random access procedure, which could be seen as unnecessary as the TA value is known to the eNB. Performing random access procedures will increase the load of the RACH channel and will also increase the delay for achieving initial time alignment.

According to current LTE Rel-11 specification, a user equipment will achieve initial uplink time alignment for a cell A by performing a random access procedure on one of the cells in the TA group which cell A belongs to. Upon achieving uplink time alignment on one of the cells in a TA group, all of the cells in that TA group will be considered uplink time aligned by the user equipment. The random access procedure will be initiated by the eNB sending an order for preamble transmission on one of the cells in the TA group in which cell A belongs. The user equipment will transmit a preamble on the cell according to the order sent by the eNB. The eNB will, when receiving the preamble, measure the uplink reception timing of the preamble and compare this to the wanted uplink reception timing in that cell. The difference in uplink reception timing of the preamble and the wanted uplink reception timing is used to create an initial TA value which will be sent to the user equipment in a random access response message. As described earlier, a TA value represents the amount of time the user equipment needs to advance the uplink transmission timing for a cell in order to be time aligned.

When the user equipment receives a random access response message, the user equipment will update the current TA value associated with the TA group in which the cell performing the random access procedure belongs to. Upon updating the TA value, the user equipment will start the TA timer associated with the TA group and thereby consider the cells in the TA group uplink time aligned. The user equipment will consider the cells in the TA group uplink time aligned as long as the associated TA timer is running, which it will do until either it is stopped or it expires. The uplink transmissions performed on a cell in that TA group will then be advanced by the amount given in the TA value in relation to the timing reference of that TA group.

In some situations, it is foreseen that the eNB will be able to know which TA value is suitable for a user equipment on a specific TA group without performing a random access procedure. With the current specification this knowledge would not be able to be utilized by the eNB and a random access procedure would still be necessary. Thus, a random access procedure is performed and the load of the RACH channel is increased which is unwanted. Also, if a random access procedure is used for achieving uplink time alignment, the delay for the random access procedure itself will be added to the delay for starting the uplink transmission by a user equipment on serving cells.

### Summary of the Example Embodiments

As discussed above, in some situations it is foreseen that the eNB will be able to know which TA value is suitable for a user equipment associated with a specific TA group without performing a random access procedure. However, with the current specification this knowledge would not be able to be utilized by the eNB and a random access procedure would be necessary to perform. However, the content of the TA value would in that case be known to the eNB, even without a preamble transmission. With some of the example embodiments described herein, the eNB could avoid ordering the user equipment to perform the random access procedure if it judges the procedure unnecessary.

According to some of the example embodiments, the user equipment may, upon reception of a TAC MAC CE, addressed to a TA group in which so far no cell has performed a random access procedure, update or replace the TA value associated with that TA group with a value of zero. The updating or replacing of the TA value will result in the associated TA timer to start, and the user equipment will consider the serving cells in this TA group as uplink time aligned. With these embodiments, the eNB may, for example, if knowing that the user equipment is close to the node which is offering the cells in said TA group, set the correct TA value, e.g., to zero, and thereby start the TA timer associated with that TA group so that the user equipment would consider the cells in said TA group as uplink time aligned. Thus, the user equipment may avoid the use of a random access procedure to achieve uplink time alignment.

According to some of the example embodiments, the user equipment may, upon reception of a TAC MAC CE addressed to a TA group in which so far no cell has performed a random access procedure, update or replace the TA value associated with that TA group with the value given in the TAC. Alternatively, a predefined, or by the network signaled, mapping between the values in the TAC and the values which the TA value should be updated or replaced with may be used. An example of such a mapping could be that a TAC value x is mapped to a TA value of x*2. With this example mapping a larger TA value range is able to be addressed, but with the cost of less accuracy. With this embodiment the eNB may change the TA value and start the TA timer for said TA group without performing a random access procedure. The eNB is expected to be able to do this, for example, if the eNB can estimate the position of the user equipment and thereby know its distance to the node offering the serving cells in said TA group. The estimated distance between the user equipment and said node can be used to calculate the needed TA value for said TA group.

According to some of the example embodiments, the user equipment may, upon configuration of a TA group, set the TA value to zero. If the eNB would judge that a user equipment could use zero as TA value for certain TA group, the eNB would then only need to send a TAC MAC CE addressed to that TA group to start the associated TA timer. Similarly, to the previously described embodiments, the eNB may send a TAC MAC CE addressed to a user equipment's TA group if the user equipment is expected to be close to the node offering the serving cells in the TA group. It should be appreciated that the TA value mentioned in the above embodiments could for example be the value NTA in 3GPP TS 36.213, Physical layer procedures, "Evolved Universal Terrestrial Radio Access (E-UTRA), Medium Access Control (MAC) protocol specification".

### Example Node Configurations

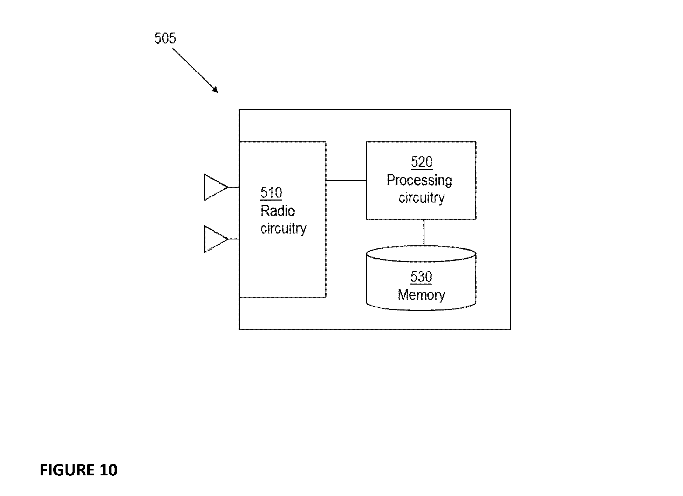

**Figure 10** illustrates an example of a user equipment 505 which may incorporate some of the example embodiments discussed above. As shown in Figure 10, the user equipment 505 may comprise a radio circuitry 510 configured to receive and transmit any form of communications or control signals within a network. It should be appreciated that the radio circuitry 510 may be comprised as any number of transceiving, receiving, and/or transmitting units or circuitry. It should further be appreciated that the radio circuitry 510 may be in the form of any input/output communications port known in the art. The radio circuitry 510 may comprise RF circuitry and baseband processing circuitry (not shown).

The user equipment 505 may further comprise at least one memory unit or circuitry 530 that may be in communication with the radio circuitry 510. The memory 530 may be configured to store received or transmitted data and/or executable program instructions. The memory 530 may also be configured to store TA values or adjustments, positioning/location information and/or mapping information. The memory 530 may be any suitable type of computer readable memory and may be of volatile and/or non-volatile type.

The user equipment 505 may further comprise processing circuitry 520 which may be configured to implement a TA value, determine a position or location of the user equipment, and/or determine a mapping associated with a TA value. The processing circuitry 520 may be any suitable type of computation unit, e.g. a microprocessor, digital signal processor (DSP), field programmable gate array (FPGA), or application specific integrated circuit (ASIC) or any other form of circuitry. It should be appreciated that the processing circuitry need not be provided as a single unit but may be provided as any number of units or circuitry.

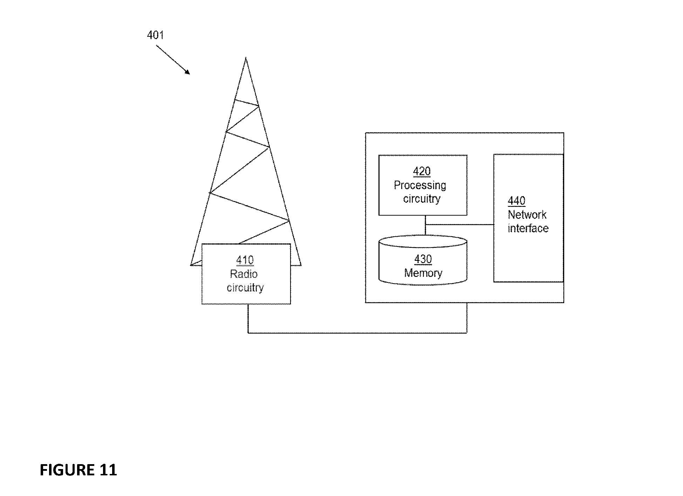

**Figure 11** illustrates an example of a base station 401 which may incorporate some of the example embodiments discussed above. As shown in Figure 11, the base station 401 may comprise radio circuitry 410 configured to receive and transmit any form of communications or control signals within a network. It should be appreciated that the radio circuitry 410 may be comprised as a single transceiving unit. It should be appreciated that the radio circuitry 410 may be comprised as any number of transceiving, receiving, and/or transmitting units or circuitry. It should further be appreciated that the radio circuitry 410 may be in the form of any input/output communications port known in the art. The radio circuitry 410 may comprise RF circuitry and baseband processing circuitry (not shown).

The base station 401 may further comprise at least one memory unit or circuitry 430 that may be in communication with the radio circuitry 410. The memory 430 may be configured to store received or transmitted data and/or executable program instructions. The memory 430 may also be configured to store TA values or adjustments, positioning/location information and/or mapping information. The memory 430 may be any suitable type of computer readable memory and may be of volatile and/or non-volatile type.

The base station 401 further comprises a network interface 440. The base station 401 may also comprise processing circuitry 420 which may be configured to determine a TA value, determine a position or location of the user equipment, and/or determine a mapping or mapping index associated with a TA value. The processing circuitry 410 may be any suitable type of computation unit, e.g. a microprocessor, digital signal processor (DSP), field programmable gate array (FPGA), or application specific integrated circuit (ASIC) or any other form of circuitry.

In particular embodiments, some or all of the functionality described above as being provided by a mobile base station, a base station controller, a relay node, a NodeB, an enhanced NodeB, positioning node, and/or any other type of mobile communications node may be provided by the processing circuitry 420 executing instructions stored on a computer-readable medium, such as the memory 430 It should be appreciated that the processing circuitry need not be provided as a single unit but may be provided as any number of units or circuitry.

### Example Node Operations

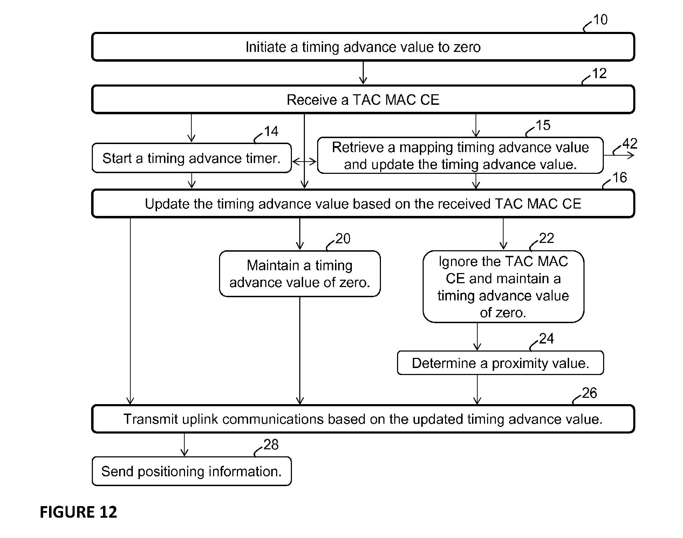

**Figure 12** is a flow diagram depicting example operations which may be taken by the user equipment of Figure 10, during uplink timing alignment, according to some of the example embodiments. It should be appreciated that the term timing advance value may refer to a value that may be utilized as an updated timing advance value. It should also be appreciated that the timing advance value may also be an adjustment value in which a current timing advance value may be increased or decreased by.

It should also be appreciated that Figure 12 comprises some operations which are illustrated with a darker boarder and some operations which are illustrated with a lighter boarder. The operations which are comprised in a darker boarder are operations which are comprised in the broadest example embodiment. The operations which are comprised in a lighter boarder are example embodiments which may be comprised in, or a part of, or are further operations which may be taken in addition to the operations of the boarder example embodiments. It should be appreciated that these operations need not be performed in order. Furthermore, it should be appreciated that not all of the operations need to be performed. The example operations may be performed in any order and in any combination.

### Operation 10

The user equipment 501 is configured to initiate 10 a timing advance value of zero during a creation of a timing advance group, during a modification of a timing advance group, and/or if a TAC MAC CE is received an a random access procedure has not been performed. The processing circuitry 520 is configured to initiate the timing advance value of zero during a creation of a timing advance group, during a modification of a timing advance group, and/or if a TAC MAC CE is received a random access procedure has not been performed.

It should be appreciated that initiating the timing advance value to zero will result in the starting of the user equipment's TA timer. Thus, by providing the initiation and starting the TA timer, the use of a random access procedure may be avoided.

### Operation 12

The user equipment 501 is further configured to receive 12, from a base station, a TAC MAC CE command. The radio circuitry 510 is configured to receive, from the base station the TAC MAC CE command. According to some of the example embodiments, the TAC MAC CE may comprise instructions for updating the timing advance value.

It should be appreciated that according to some of the example embodiments, base station may have knowledge that the user equipment has initiated a timing advance value to, as described in relation to operation 10. Thus, knowing that the user equipment has established a timing advance value, the base station may send the TAC MAC CE without having the user equipment undergo a random access procedure.

### Example Operation 14

According to some of the example embodiments, the receiving 12 may further comprise starting 14 a timing advance timer, as described in relation to operation 10. The processing circuitry 520 may be configured to start the timing advance timer (also known herein as the TA timer).

### Example Operation 15

According to some of the example embodiments, the user equipment may be configured to retrieve 15 a mapping timing advance value based on a mapping index, and update said timing advance value based on the retrieved mapping timing advance value. The processing circuitry 520 may be configured to retrieve the mapping timing advance value based on the mapping index, and update the timing advance value based on the retrieved mapping timing advance value.

As previously described, in the Summary of Example Embodiments section, the size of the timing advance value or related instructions that may be comprised in the TAC MAC CE, may be larger than what is possible to be transmitted in the TAC MAC CE. Thus, in order to solve this problem, the TAC MAC CE may comprise a mapping index that the processing circuitry 520 may utilize to obtain the mapping timing advance value. The mapping timing advance value may, for example, be obtained from a table or mapping located within the user equipment or any other node in the network. It should also be appreciated that the table or mapping may also be located in a stand-alone storage unit.

According to some of the example embodiments, the TAC MAC CE may comprise the mapping index or may comprise information identifying such an index. According to some of the example embodiments, the user equipment may utilize any information identifying a mapping index to receive the mapping index which may be stored within the user equipment or any other storage within the network.

It should be appreciated that, according to some of the example embodiments, the TA timer may be restarted after retrieving the mapping timing advance value. It should further be appreciated that the mapping index may be received from the base station (as explained in relation to example operation 42). The base station may be configured to send the mapping index upon receiving a request from the user equipment or upon any other triggering event. It should further be appreciate that the mapping index may be received from the base station at any time. Furthermore, the mapping index may be sent in the TAC MAC CE or in any other message.

### Operation 16

The user equipment 501 is further configured to update 16 the timing advance value based on the received TAC MAC CE command. The processing circuitry 520 is configured to update the timing advance value based on the received TAC MAC CE command. It should be appreciated that according to some of the example embodiments, the updating may be provided based on information supplied in the TAC MAC CE and/or based on predetermined or preconfigured rules associated with the user equipment. According to some of the example embodiments the updating may be based on the retrieved mapping index or any other information available to the user equipment.

### Example Operation 20

According to some of the example embodiments, the updating 16 may further comprising maintaining 20 a timing advance value of zero. The processing circuitry 520 may be configured to maintain the timing advance value of zero.

According to some of the example embodiments, a timing advance value of zero may be maintained, for example, if the user equipment is located in close proximity of a receiver and/or if an uplink cell size of the user equipment is relatively small or within a threshold value. The granularity of the time alignment value may be approximately 0.5µs. As the time alignment value shall compensate for the round-trip delay, the time alignment granularity in one-way propagation distance may therefore be approximately 0.25µs. A 0.25µs propagation delay equals approximately 75-80 meters. This value may, for example, be used as a threshold value. Another, example, threshold value may be based on how large the time alignment error the receiver can cope with. One eNB may be able to correctly receive a signal even though the time alignment value is incorrect by a small value, e.g. 3-4 time alignment granularity steps.

According to some of the example embodiments, the decision to maintain the timing advance value of zero may be provided by instructions or a TA value comprised in the MAC TAC CE. According to some of the example embodiments, the decision to maintain the zero timing advance value may be provided by the user equipment based on predetermined or preconfigured rules, which may be, for example, based on location or position information. The location or position information may be with respect to the uplink cell size, and/or a proximity to the receiver. Any or all location or position information may be provided with respect to a user programmable threshold.

According to some of the example embodiments, the decision to maintain the timing advance value of zero may be based on the TAC MAC CE not comprising a timing advance value or a timing advance adjustment. Thus, the base station may purposefully send such a TAC MAC CE in order for the user equipment to restart its TA timer upon receipt of the TAC MAC CE. Thus, it should be appreciated that, according to some of the example embodiments, the TA timer may be restarted after the timing advance value of zero is maintained.

### Example Operation 22

According to some of the example embodiments, the updating 16 may further comprise ignoring 22 the TAC MAC CE command and maintaining the timing advance value of zero. The processing circuitry 520 may be configured to ignore the TAC MAC CE command and maintain the timing advance value of zero. It should be appreciated that, according to some of the example embodiments, the TA timer may be restarted after ignoring the TAC MAC CE command and maintaining the timing advance value of zero.

### Example Operation 24

According to some of the example embodiments, the updating 16 and/or ignoring 22 may further comprise determining 24 a proximity to an uplink receiver is within a threshold value, and/or an uplink cell size is within a threshold value. The processing circuitry 520 may be configured to determine the proximity to the uplink receiver is within a threshold value, and/or the uplink cell size is within the threshold value. According to some of the example embodiments, the determining may be provided based on predetermined and/or preconfigured rules within the user equipment.

### Operation 26

The user equipment 505 is further configured to transmit 26, to the uplink receiver, uplink communications based on the updated timing advance value. The radio circuitry 510 is configured to transmit, to the uplink receiver, the uplink communications based on the updated timing advance value.

### Example Operation 28

According to some of the example embodiments, the user equipment is also configured to send 28, to the base station, position information. The radio circuitry 520 may be configured to send, to the base station, the position information. According to some of the example embodiments, the position information may comprise a proximity to the uplink receiver and/or an uplink cell size. It should be appreciated that the position information may be sent to the base station at any time. Furthermore it should be appreciated that the position information may be sent as a result of the base station sending a request for such information or based on any other triggering event or predefined rules.

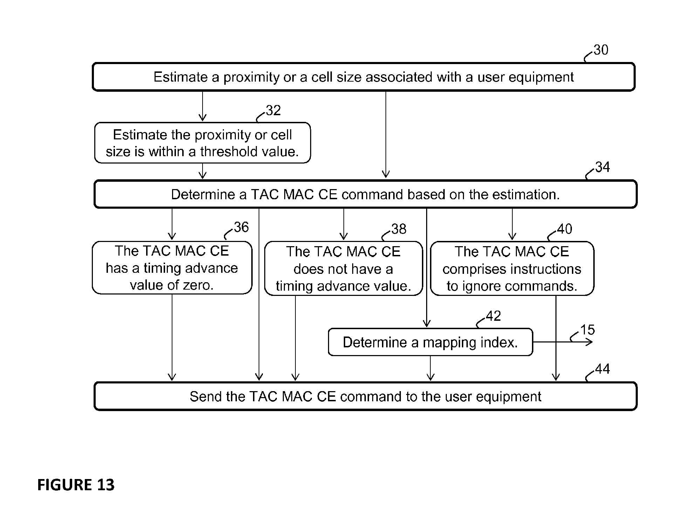

**Figure 13** is a flow diagram illustrating example operations which may be taken by the base station of Figure 11 in providing uplink timing alignment, according to some of the example embodiments. It should be appreciated that the term timing advance value may refer to a value that may be utilized as an updated timing advance value. It should also be appreciated that the timing advance value may also be an adjustment value in which a current timing advance value may be increased or decreased by.

It should also be appreciated that Figure 13 comprises some operations which are illustrated with a darker boarder and some operations which are illustrated with a lighter boarder. The operations which are comprised in a darker boarder are operations which are comprised in the broadest example embodiment. The operations which are comprised in a lighter boarder are example embodiments which may be comprised in, or a part of, or are further operations which may be taken in addition to the operations of the boarder example embodiments. It should be appreciated that these operations need not be performed in order. Furthermore, it should be appreciated that not all of the operations need to be performed. The example operations may be performed in any order and in any combination.

### Operation 30

The base station is configured to estimate 30 a proximity of the user equipment to an uplink receiver and/or an uplink cell size of the user equipment. The processing circuitry 420 is configured to estimate the proximity of the user equipment to the uplink receiver and/or the uplink cell size of the user equipment.

According to some of the example embodiments, the base station perform the estimating 30 based on information received from, for example, the user equipment, or any other node in the network. It should also be appreciated that the base station may be configured to perform such estimations or determinations itself based on available information.

### Example Operation 32

According to some of the example embodiments, the estimating 30 may further comprise estimating 32 that the proximity of the user equipment to the uplink receiver is within a threshold value and/or the uplink cell size of the user equipment is within a threshold value. The processing circuitry 420 may be configured to estimate that the proximity of the user equipment to the uplink receiver is within a threshold value and/or the uplink cell size of the user equipment is within a threshold value.

### Operation 34

The base station is also configured to determine 34 a TAC MAC CE command based on the estimating 30. The processing circuitry 420 is configured to determine the TAC MAC CE command based on the estimation.

### Example Operation 36

According to some of the example embodiments, the determining 34 may further comprise determining 36 the TAC MAC CE command to have a timing advance value of zero. The processing circuitry 420 may determine the TAC MAC CE command to have a timing advance value of zero.

According to some of the example embodiments, the base station may provide such a timing advance value if the user equipment is located in close proximity of a receiver and/or if an uplink cell size of the user equipment is relatively small or within a threshold value. It should be appreciated that the decision to provide a timing advance value of zero may be provided as a result of predetermined or preconfigured rules within the base station.

### Example Operation 38

According to some of the example embodiments, the determining 34 may further comprise determining 38 the TAC MAC CE not to comprise a timing advance value or a timing adjustment value. The processing circuitry 420 may be configured to determine the TAC MAC CE not to comprise the timing advance value or the timing adjustment value.

According to some of the example embodiments, the determination may be provided if the user equipment is located in close proximity of a receiver and/or if an uplink cell size of the user equipment is relatively small or within a threshold value. Thus, the base station may provide such a timing advance value merely to have the user equipment restart its TA timer.

### Example Operation 40

According to some of the example embodiments, the determining 34 may further comprise determining 40 the TAC MAC CE command to comprise instructions for ignoring timing advance values comprised in future TAC MAC CE commands. The processing circuitry 420 may be configured to determine the TAC MAC CE command to comprise instructions for ignoring timing advance values comprised in future TAC MAC CE commands.

According to some of the example embodiments, the determination may be provided if the user equipment is located in close proximity of a receiver and/or if an uplink cell size of the user equipment is relatively small or within a threshold value. Thus, the base station may provide the TAC MAC CE command merely to have the user equipment restart its TA timer.

### Example Operation 42

According to some of the example embodiments, the determining 34 may further comprise determining a mapping index to be used for obtaining a timing advance value, and sending said mapping index to the user equipment. The processing circuitry 420 may be configured to determine the mapping index to be used for obtaining the timing advance value. The radio circuitry 410 may be configured to send the mapping index to the user equipment. It should be appreciated that the base station may be configured to send the mapping index to the user equipment at any time (as is explained in relation to example operation 42). Furthermore, it should be appreciated that the sending may be as a result of a request for such information from the user equipment. The sending may also be a result of any other trigger or may be based on preconfigured rules. Furthermore, it should be appreciated that the mapping index may be sent in a TAC MAC CE or any other message.

As previously described, in the Summary of Example Embodiments section, the size of the timing advance value or related instructions that may be comprised in the TAC MAC CE, may be larger than what is possible to be transmitted in the TAC MAC CE. Thus, in order to solve this problem, the TAC MAC CE may comprise a mapping index that the user equipment may utilize to obtain the mapping timing advance value. The mapping timing advance value may, for example, be obtained from a table or mapping located within the user equipment or any other node in the network. It should also be appreciated that the table or mapping may also be located in a stand-alone storage unit.

According to some of the example embodiments, the TAC MAC CE may comprise the mapping index or may comprise information identifying such an index. According to some of the example embodiments, the user equipment may utilize any information identifying a mapping index to receive the mapping index which may be stored within the user equipment or any other storage within the network.

### Operation 44

The base station 401 is further configured to send 44 the TAC MAC CE to the user equipment for uplink timing alignment. The radio circuitry 410 is configured to send the TAC MAC CE to the user equipment for uplink timing alignment.

### Conclusion

The description of the example embodiments provided herein have been presented for purposes of illustration. The description is not intended to be exhaustive or to limit example embodiments to the precise form disclosed, and modifications and variations are possible in light of the above teachings or may be acquired from practice of various alternatives to the provided embodiments. The examples discussed herein were chosen and described in order to explain the principles and the nature of various example embodiments and its practical application to enable one skilled in the art to utilize the example embodiments in various manners and with various modifications as are suited to the particular use contemplated. The features of the embodiments described herein may be combined in all possible combinations of methods, apparatus, modules, systems, and computer program products. It should be appreciated that the example embodiments presented herein may be practiced in any combination with each other.

It should be noted that the word "comprising" does not necessarily exclude the presence of other elements or steps than those listed and the words "a" or "an" preceding an element do not exclude the presence of a plurality of such elements. It should further be noted that any reference signs do not limit the scope of the claims, that the example embodiments may be implemented at least in part by means of both hardware and software, and that several "means", "units" or "devices" may be represented by the same item of hardware.

A "device" as the term is used herein, is to be broadly interpreted to include a radiotelephone having ability for Internet/intranet access, web browser, organizer, calendar, a camera (e.g., video and/or still image camera), a sound recorder (e.g., a microphone), and/or global positioning system (GPS) receiver; a personal communications system (PCS) user equipment that may combine a cellular radiotelephone with data processing; a personal digital assistant (PDA) that can include a radiotelephone or wireless communication system; a laptop; a camera (e.g., video and/or still image camera) having communication ability; and any other computation or communication device capable of transceiving, such as a personal computer, a home entertainment system, a television, etc.

Although the description is mainly given for a user equipment, as measuring or recording unit, it should be understood by the skilled in the art that "user equipment" is a non-limiting term which means any wireless device, terminal, or node capable of receiving in DL and transmitting in UL (e.g. PDA, laptop, mobile, sensor, fixed relay, mobile relay or even a radio base station, e.g. femto base station).

A cell is associated with a radio node, where a radio node or radio network node or eNodeB used interchangeably in the example embodiment description, comprises in a general sense any node transmitting radio signals used for measurements, e.g., eNodeB, macro/micro/pico base station, home eNodeB, relay, beacon device, or repeater. A radio node herein may comprise a radio node operating in one or more frequencies or frequency bands. It may be a radio node capable of CA. It may also be a single- or muti-RAT node. A multi-RAT node may comprise a node with co-located RATs or supporting multi-standard radio (MSR) or a mixed radio node.

The various example embodiments described herein are described in the general context of method steps or processes, which may be implemented in one aspect by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Generally, program modules may include routines, programs, objects, components, data structures, etc. that perform particular tasks or implement particular abstract data types. Computer-executable instructions, associated data structures, and program modules represent examples of program code for executing steps of the methods disclosed herein. The particular sequence of such executable instructions or associated data structures represents examples of corresponding acts for implementing the functions described in such steps or processes.

In the drawings and specification, there have been disclosed exemplary embodiments. However, many variations and modifications can be made to these embodiments. Accordingly, although specific terms are employed, they are used in a generic and descriptive sense only and not for purposes of limitation, the scope of the embodiments being defined by the following claims.

There are generally disclosed:
- E1.: A method in a user equipment **(501)** for uplink timing alignment, the user equipment being comprised in wireless communications network, the method comprising:
initiating **(10)** a timing advance value to zero during a creation of a timing advance group, during a modification of a timing advance group, and/or if a timing advance command medium access control control element, TAC MAC CE, is received and a random access procedure has not been performed;
receiving **(12),** from a base station **(401),** a TAC MAC CE command; updating **(16)** the timing advance value based on the received TAC MAC CE command; and
transmitting (26), to an uplink receiver, uplink communications based on the updated timing advance value.
- E2.: The method of E1, wherein the receiving **(12)** further comprises starting **(14)** a timing advance timer.
- E3.: The method of any of E1-E2, wherein the TAC MAC CE command further comprises instructions for updating the timing advance value.
- E4.: The method of any of E1-E3, wherein the updating **(16)** further comprises retrieving **(15)** a mapping timing advance value based on a mapping index, and updating said timing advance value based on the retrieved mapping timing advance value.
- E5.: The method of any of E1-E4, wherein the updating **(16)** further comprises maintaining **(20)** a timing advance value of zero.
- E6.: The method of any of E1-E5, wherein the updating **(16)** further comprises ignoring **(22)** the TAC MAC CE command and maintain the timing advance value of zero.
- E7.: The method of E6, further comprising determining **(24)** a proximity to the uplink receiver is within a threshold value, and/or an uplink cell size is within a threshold value.
- E8.: The method of E7, wherein the determining **(24)** is based on preconfigured rules.
- E9.: The method of E5, wherein the TAC MAC CE command does not comprise a timing advance value or timing advance adjustment.
- E10.: The method of any of E1-E9, further comprising sending **(28),** to the base station, position information.
- E11.: The method of E10, wherein the position information comprises a proximity to the uplink receiver and/or an uplink cell size.
- E12.: A user equipment **(501)** for uplink timing alignment, the user equipment being comprised in a wireless communications network, the user equipment comprising:
processing circuitry **(520)** configured to initiate a timing advance value to zero during a creation of a timing advance group, during a modification of a timing advance group, and/or if a timing advance command medium access control control element, TAC MAC CE, is received and a random access procedure has not been performed;
radio circuitry **(510)** configured to receive, from a base station **(401),** a TAC MAC CE command;
the processing circuitry **(520)** further configured to update the timing advance value based on the received TAC MAC CE command; and
the radio circuitry **(510)** further configured to transmit, to an uplink receiver, uplink communications based on the updated timing advance value.
- E13.: The user equipment **(501)** of E12, wherein the processing circuitry **(520)** is further configured to start a timing advance timer upon receiving the TAC MAC CE.
- E14.: The user equipment **(501)** of any of E12-E13, wherein the TAC MAC CE command further comprises instructions for updating the timing advance value.
- E15.: The user equipment **(501)** of any of E12-E14, wherein the processing circuitry **(520)** is further configured to retrieve a mapping timing advance value based on a mapping index, and update said timing advance value based on the retrieved mapping timing advance value.
- E16.: The user equipment **(501)** of any of E12-E15, wherein the processing circuitry **(520)** is further configured to maintain a timing advance value of zero.
- E17.: The user equipment **(501)** of any of E12-E16, wherein the processing circuitry **(520)** is further configured to ignore the TAC MAC CE command and maintain the timing advance value of zero.
- E18.: The user equipment **(501)** of E17, wherein the processing circuitry **(520)** is further configured to determine a proximity to the uplink receiver is within a threshold value, and/or an uplink cell size is within a threshold value.
- E19.: The user equipment **(501)** of E18, wherein the processing circuitry **(520)** is further configured to determine the proximity and/or uplink cell size based on preconfigured rules.
- E20.: The user equipment **(501)** of E16 wherein the TAC MAC CE command does not comprise a timing advance value or timing advance adjustment.
- E21.: The user equipment **(501)** of any of E12-E20, wherein the radio circuitry **(510)** is further configured to send, to the base station, position information.
- E22.: The user equipment **(501)** of E19, wherein the position information comprises a proximity to the uplink receiver and/or an uplink cell size.
- E23.: A method in a base station **(401)** for uplink timing alignment, the base station being comprised in a carrier aggregated wireless communications network, the method comprising:
estimating **(30)** a proximity of a user equipment to an uplink receiver, or a uplink cell size of a user equipment **(501);**
determining **(34)** a timing advance command medium access control control element, TAC MAC CE, command based on the estimating **(30);** and
sending **(44)** the TAC MAC CE command to the user equipment **(501)** for uplink timing alignment.
- E24.: The method of E23, wherein the estimating **(30)** further comprises estimating **(32)** that the proximity of the user equipment to the uplink receiver is within a threshold value and/or the uplink cell size of the user equipment is within a threshold value.
- E25.: The method of E24, wherein the determining **(34)** further comprises determining **(36)** the TAC MAC CE command to have a timing advance value of zero.
- E26.: The method of E24, wherein the determining **(34)** further comprises determining **(38)** the TAC MAC CE command not to comprise a timing advance value.
- E27.: The method of E24, wherein the determining **(34)** further comprises determining **(40)** the TAC MAC CE command to comprise instructions for ignoring timing advance values comprised in future TAC MAC CE commands.
- E28.: The method of E23, wherein the determining **(34)** further comprises determining **(42)** a mapping index to be used for obtaining a timing advance value, and sending said mapping index to the user equipment.
- E29.: A base station **(401)** for uplink timing alignment, the base station being comprised in a carrier aggregated wireless communications network, the base station comprising:
processing circuitry **(420)** configured to estimate a proximity of a user equipment to an uplink receiver, or a uplink cell size of the user equipment **(501);**
the processing circuitry **(420)** further configured to determine a timing advance command medium access control control element, TAC MAC CE, command based on the estimation; and
radio circuitry **(410)** configured to send the TAC MAC CE command to the user equipment **(501)** for uplink timing alignment.
- E30.: The base station **(401)** of E29, wherein the processing circuitry **(420)** is further configured to estimate that the proximity of the user equipment to the uplink receiver is within a threshold value and/or the uplink cell size of the user equipment **(501)** is within a threshold value.
- E31.: The base station **(401)** of E30, wherein the processing circuitry **(420)** is further configured to determine the TAC MAC CE command to have a timing advance value of zero.
- E32.: The base station **(401)** of E30, wherein the processing circuitry **(420)** is further configured to determine the TAC MAC CE command not to comprise a timing advance value or timing adjustment.
- E33.: The base station **(401)** of E30, the processing circuitry **(420)** is further configured to determine the TAC MAC CE command to comprise instructions for ignoring timing advance values comprised in future TAC MAC CE commands.
- E34.: The base station **(401)** of E29, wherein the processing circuitry **(420)** is further configured to determine a mapping index to be used in obtaining a timing advance value, and the radio circuitry **(410)** configured to send said mapping index to the user equipment **(501).**

## Claims

1. Method of operating a user equipment in a wireless communication network, the method comprising:
receiving, by the user equipment, of a TAC MAC CE; the TAC MAC CE being addressed to a TA group in which so far no cell has performed a random access procedure; and
updating or replacing, by the user equipment, of a TA value associated with that TA group with a value of zero.

2. User equipment for a wireless communication network,
the user equipment being adapted for reception of a TAC MAC CE message, the TAC MAC CE message being addressed to a TA group in which so far no cell has performed a random access procedure;
the user equipment being further adapted to update or replace a TA value associated with that TA group with a value of zero.

3. Method of operating a user equipment in a wireless communication network, the method comprising
Receiving, by the user equipment, of a TAC MAC CE addressed to a TA group in which so far no cell has performed a random access procedure; and
updating or replacing the TA value associated with that TA group with a value given in the TAC MAC CE, or with a value mapped to a value given in the TAC MAC CE, the value being mapped according to a predefined, or by the network signaled, mapping between the value in the TAC MAC CE and the value which the TA value should be updated or replaced.

4. User equipment for a wireless communication network,
the user equipment being adapted to receive a TAC MAC CE addressed to a TA group in which so far no cell has performed a random access procedure;
the user equipment being further adapted to update or replace the TA value associated with that TA group with a value given in the TAC MAC CE, or with a value mapped to a value given in the TAC MAC CE, the value being mapped according to a predefined, or by the network signaled, mapping between the value in the TAC MAC CE and the value which the TA value should be updated or replaced.

5. Method for operating a user equipment in a wireless communication network, the method comprising: setting a TA value of a TA group to zero upon configuration of the TA group.

6. User equipment for a wireless communication network, the user equipment being adapted to set a TA value of a TA group to zero upon configuration of the TA group.

7. Method for operating an eNB in a wireless communication network, the method comprising:
sending, by the eNB, to a user equipment a TAC MAC CE being addressed to a TA group in which so far no cell has performed a random access procedure.

8. eNB for a wireless communication network, the eNB being adapted to send, to a user equipment, a TAC MAC CE being addressed to a TA group in which so far no cell has performed a random access procedure.
